# EUROPÄISCHE PATENTSCHRIFT

(11) **EP 1 711 820 B1**
(45) Veröffentlichungstag und Bekanntmachung des Hinweises auf die Patenterteilung: **23.07.2008**
(21) Anmeldenummer: 05701310.4
(22) Anmeldetag: 02.02.2005
(51) Int. Cl.: G01N 33/53, B01L 3/00

(54) **VORRICHTUNG UND VERFAHREN ZUM NACHWEIS VON ANALYTEN DURCH SICHTBARMACHUNG UND SEPARATION VON AGGLUTINATION**
DEVICE AND METHOD FOR DETECTING ANALYTES BY VISUALIZATION AND SEPARATION OF AGGLUTINATION
PROCEDE ET DISPOSITIF POUR DECELER LA PRESENCE D'ANALYTES PAR VISUALISATION ET SEPARATION DE MATIERES AGGLUTINEES

(30) Priorität: 02.02.2004 DE 102004005193
(43) Veröffentlichungstag der Anmeldung: 18.10.2006
(73) Patentinhaber: Medion Diagnostics AG, 3186 Düdingen (CH)
(72) Erfinder: SCHWIND, Peter, CH-1700 Fribourg (CH); MONOD, Philippe, CH-1725 Posieux (CH)
(74) Vertreter: Bublak, Wolfgang
(86) Internationale Anmeldenummer: PCT/EP2005/001029
(87) Internationale Veröffentlichungsnummer: WO 2005/090970

(56) Entgegenhaltungen:
- EP-A- 0 485 228
- EP-A- 0 849 595
- US-A1- 2003 129 671

## Beschreibung

Die vorliegende Erfindung betrifft eine Vorrichtung und ein Verfahren zum Nachweis eines oder mehrerer Analyten in einer Probenflüssigkeit durch Sichtbarmachung von Agglutinationsreaktionen, insbesondere Hämagglutinations- oder Partikelagglutinationsreaktionen.

Methoden zum Nachweis von Analyten durch Hämagglutinations- sowie Partikelagglutinationstests sind bekannt. Für Hämagglutinationstests sind Verfahren bekannt, bei denen Hämagglutinate durch einen Zentrifugationsschritt durch eine inerte Matrix von einzelnen nicht-agglutinierten Erythrozyten getrennt werden (z. B. EP-A-0194212, EP-A-0305337, EP-A-0485228, EP-A-0725276). Gemäss diesen Verfahren werden agglutinierte Erythrozyten auf oder in der inerten Matrix festgehalten und können damit von nicht-reagierenden einzelnen Erythrozyten getrennt werden, welche die Matrix durchdringen können und am Boden des Reaktionsgefäßes sedimentieren.

US Patent US 2003/0129671 beschriebt eine Vorrichtung zum Nachweis der Anwesenheit einer Analyte in einer flüssigen Probe. Die Vorrichtung umfasst eine Probe-Einlass-Öffnung und ein mittelgroß Fluss-System.

Die Trennmatrizes sind üblicherweise poröse Matrizes (beispielsweise aus Glas); Gelkugel-Matrizes (beispielsweise aus Sephadex, Sephacryl, Agarose: EP-A-0194212, EP-A-0305337) oder Glaskugel-Matrizes (EP-A-0725276).

Allen diesen Systemen ist gemeinsam, dass die Trennmatrix und das Trägerelementsystem zwei getrennte Komponenten umfassen. Dasselbe gilt für ebenfalls offenbarte Methoden, bei denen anstelle von Kügelchen poröse bzw. Filter-Matrizes verwendet werden. Das Trägerelementsystem wird jeweils mit herkömmlichen (Makro-) Spritzgussmethoden gefertigt.

Die genannten Matrizes werden in der blutgruppenserologischen Diagnostik verwendet, insbesondere zur Sichtbarmachung von Hämagglutinationsreaktionen. Sie weisen allgemein Parameter nach, die besonders im Zusammenhang mit Transfusionen bzw. dem Morbus Hämolyticus Neonatorum von Bedeutung sind. Dabei handelt es sich unter anderem um den Nachweis von Antigenen auf der Oberfläche der Erythrozyten, die für die Blutgruppen charakteristisch sind. Weitere wichtige Antigensysteme befinden sich auch auf Thrombozyten, Granulozyten, Lymphozyten, die ebenfalls bei Transfusion und/oder Transplantation eine Rolle spielen. Des weiteren können in ähnlicher Weise hämagglutinierende Viren nachgewiesen werden.

Die genannten Matrizes, insbesondere Gelkugelmatrizes, werden ebenfalls für Partikelagglutinationstests eingesetzt. Bislang wird jedoch nur mit synthetischen Partikeln gearbeitet, die enge Spezifikationen erfüllen, insbesondere eine hohe spezifische Dichte und einen geringeren Durchmesser als Erythrozyten aufweisen (z.B. spezifische Dichte >/= 1,1; Durchmesser < 5 µm; vgl. EP-0849595).

Die bekannten Verfahren weisen eine Reihe von Nachteilen auf. Durch die Zentrifugation wird zwar eine räumliche Trennung von hämagglutinierten und einzelnen Erythrozyten erreicht, die Reaktionsmatrix für positive und negative Reaktionen umfasst jedoch ein einziges Kompartiment, so dass der Übergang von negativen (nicht-agglutiniert) zu positiven (agglutiniert) Reaktionen fließend ist und die Ergebnisauswertung damit einer gewissen Subjektivität unterliegt. Besonders bei schwach positiven Reaktionen kann die unscharfe Abgrenzung zu negativen Ergebnissen zu Interpretationsschwierigkeiten führen. Weiterhin hängt die Reproduzierbarkeit der bekannten Verfahren, die insbesondere mit Gelkugel-Matrix funktionieren, stark von der Qualität der Matrix, üblicherweise Polyacrylamid-Gelkügelchen, ab. Diese Gele weisen von einer Charge zur anderen Unterschiede auf, die bei gleicher Probe zu unterschiedlich starken Nachweisreaktionen führen können. Dies erschwert die Standardisierung und Reproduzierbarkeit der Ergebnisse. Die Empfindlichkeit der Gelpartikel gegenüber jeglicher Art von Scherkräften mit der Folge von insbesondere gebrochenen Gelpartikeln ist ein weiteres Problem, das zu verfälschten Reaktionen führen kann. Ferner ist allen hier erwähnten Matrizes gemeinsam, dass sie dreidimensional sind und ein großer Bestandteil des Matrixraumes aus den Matrixpolymeren besteht, was dazu führt, dass ein Teil der farbigen Partikel, die in der Matrix eingeschlossen sind, für das bloße Auge verborgen bleiben, also nicht zur Detektion beitragen können. Weiterhin sind diese Verfahren für den Nachweis von Thrombozyteneigenschaften an intakten Thrombozyten wenig geeignet, da Thrombozyten das Gel nur schlecht passieren können.

Aufgabe der vorliegenden Erfindung ist es daher, die im Hinblick auf den Stand der Technik angeführten Nachteile, insbesondere die unscharfe Trennung des Nachweises von schwach positiven gegenüber negativen Reaktionen in den bekannten Matrizes und die Lot-zu-Lot-Schwankungen in Gel-Matrizes, zu überwinden, ohne dabei auf die Vorteile der Verfahren gemäss Stand der Technik, wie z. B. die mechanische Stabilität der in der Matrix festgehaltenen Agglutinate (stabiler Endpunkt) verzichten zu müssen. Insbesondere soll eine Trenn-Matrix in Abwesenheit von Gelpartikeln bereitgestellt werden, d. h. es soll ein Raum ohne Matrix im bekannten, engeren Sinne bereitgestellt werden, in dem die Bereiche für positive und negative Reaktionen ohne fließenden Übergang räumlich getrennt sind.

Diese Aufgabe wird erfindungsgemäß gelöst zum einen durch eine Vorrichtung zum Nachweis eines oder mehrerer Analyten in einer Probe, umfassend eine oder mehrere, zur Aufnahme einer Probe geeignete Reaktionskammern (1) sowie optional einem oder mehrere Reagenzapplikations-Kanäle (2), mit einem oder mehreren, an die Reaktionskammern (1) oder den Reagenzapplikations-Kanäle (2) sich anschließenden Kapillarsystemen (3), wobei sich ein oder mehrere Negativ-Gefäße (4) an das oder die Kapillarsysteme (3) anschließen, wobei ein Kapillarsystem (3) mindestens eine Kapillare (3b) einer Kapillarebene (3a) umfasst oder eine oder mehrere Kapillaren (3b) umfasst, die in eine oder mehrere Kapillarebenen (3a) verjüngt sind.

Das Kapillarsystem der erfindungsgemäßen Vorrichtung, das sich vorzugsweise einer Reaktionskammer oder einem Reagenzapplikationskanal anschließt, ist integraler Bestandteil eines Trägerelements, welches vorzugsweise aus synthetischen Materialien besteht, beispielsweise Polyethylen, Polypropylen, Polystyrol, Topas oder Polymethylmetacrylat, und ist selbst Matrix-frei.

Ein Kapillarsystem umfasst mindestens eine Kapillare einer Kapillarebene oder eine oder mehrere Kapillaren, die in eine oder mehrere Kapillarebenen verzweigt oder verjüngt sind. Es umfasst in einer bevorzugten Ausführungsform der Vorrichtung eine oder mehrere Kapillaren, die sich stufenweise in weitere Kapillarebenen verjüngen, die jeweils untereinander angeordnet sind, und sich am Ende in einem Negativ-Gefäß sammeln. Das Kapillarsystem umfasst mindestens eine Kapillare einer Ebene, die in ein Negativ-Gefäß mündet. In einer Ausführungsform der Erfindung sind pro Kapillarebene mehrere Kapillaren nebeneinander oder gebündelt angeordnet. Vorzugsweise besitzen nebeneinander oder gebündelt angeordnete Kapillaren einer Kapillarebene die gleiche Durchtrittsfläche für die zu testende Flüssigkeit. Die Durchtrittsfläche der Kapillare oder der Kapillaren einer Kapillarebenen wird um so kleiner, je weiter distal sie von der Reaktionskammer angeordnet sind.

Eine Ausführungsform der erfindungsgemäßen Vorrichtung umfasst ein Kapillarsystem mit nur einer Kapillare einer Kapillarebene. Beispielhaft weist die Durchtrittsfläche einer Kapillare dabei weniger als 250.000 µm² auf.

In einer bevorzugten Ausführungsform sind die Kapillarebenen des Kapillarsystems durch Kammern verbunden, deren Durchtrittsfläche vorzugsweise genauso groß ist, wie diejenige der Kapillare mit dem größten Durchmesser, wobei die Kammern vorzugsweise der Entlüftung bzw. dem Druckausgleich dienen. In einer weiteren Ausführungsform der erfindungsgemäßen Vorrichtung weisen nebeneinander angeordnete Kapillaren einer Kapillarebene Verbindungsstege auf, durch die sie miteinander verbunden sind.

In einer bevorzugten Ausführungsform sind die Kapillaren (sofern es sich um mehr als eine Kapillare handelt) der erfindungsgemäßen Vorrichtung in jeder Ebene parallel nebeneinander und nicht gebündelt angeordnet, wodurch die Farbe der Partikel optimal für die Detektion genutzt werden kann.

Die erfindungsgemäße Vorrichtung weist vorzugsweise einen Reagenzapplikationskanal auf. In einer besonders bevorzugten Ausführungsform der erfindungsgemäßen Vorrichtung ist der Reagenzapplikations-Kanal mit einem Reagenz, beispielhaft ein Puffer, Verstärkerlösungen, Antikörper, vorbefüllt. Beispielhaft weist der Reagenzapplikationskanal das 1,2-fache Volumen im Vergleich zum Kapillarsystem plus Negativ-Gefäß auf.

In einer bevorzugten Ausführungsform der erfindungsgemäßen Vorrichtung weist das Negativ-Gefäß eine nach unten sich verengende, schmaler werdende Form auf, beispielhaft pfeilartig nach unten zugespitzt oder U-förmig. Es ist an seiner Oberseite vorzugsweise mindestens so breit wie die Breite der Summe der Kapillaren der untersten Kapillarebene. Die Oberseite des Negativ-Gefäßes verläuft im rechten Winkel oder in jedem anderen Winkel, insbesondere kleinerem Winkel zum Kapillarsystem. Das Negativ-Gefäß weist in einer Ausführungsform vorzugsweise ein größeres Volumen auf, als das Volumen des gepackten Sediments der eingesetzten Zellen oder Partikel. In einer bevorzugten Ausführungsform ist das Volumen des Negativ-Gefäßes mindestens 0,8 mal so groß wie das Volumen des gesamten Kapillarsystems.

In einer weiteren bevorzugten Ausführungsform befindet sich am Negativ-Gefäß mindestens ein Entlüftungskanal, bevorzugt an der breitesten Stelle eines Negativ-Gefäßes, dessen Verbindung zur unteren Ebene des Kapillarsystems vorzugsweise breiter ist als die Breite der Summe der Kapillaren der untersten Kapillarebene, der vorzugsweise außerhalb des Kapillarsystems nach oben verläuft.

In einer besonders bevorzugten Ausführungsform sind mehrere erfindungsgemaße Vorrichtungen (Reaktoren), jeweils mindestens umfassend eine Reaktionskammer, und/oder einen Reagenzapplikations-Kanal und ein Kapillarsystem und ein Negativ-Gefäß, parallel nebeneinander in ein synthetisches Trägerelement zusammengefasst. Beispielsweise vorhandene Entlüftungskanäle führen durch das Trägerelement nach oben. In einer weiteren bevorzugten Ausführungsform können Teilbereiche der Außenwand eines Reaktors, vorzugsweise im Bereich des Kapillarsystems als optische Linse ausgestaltet sein, die der Wand eines einzelnen Reaktors bzw. der gesamten erfindungsgemäßen Vorrichtung die Funktion einer Lupe verleiht, um die Ablesung schwacher Reaktionen zu erleichtern.

Ein weiterer Gegenstand der Erfindung ist die Verwendung der erfindungsgemäßen Vorrichtung insbesondere in der blutgruppenserologischen Diagnostik, vorzugsweise zur Bestimmung von menschlichen und tierischen Blutgruppen, Antikörpern gegen Blutgruppen, zur Bestimmung von Thrombozytenmerkmalen und gegen Thrombozyten gerichteten Antikörpern, zur Bestimmung von Leukozytenmerkmalen und gegen Leukozyten gerichteten Antikörpern, zum Nachweis hämagglutinierender Viren, zum Nachweis von Antikörpern gegen Peptide, Proteine, Kohlenhydrate, Nukleinsäuren, Viren, Bakterien, Parasiten, zum Nachweis viraler, bakterieller und parasitärer und anderer Antigene und/oder zum Nachweis von Autoantikörpern und Antikörpern gegen Allergene.

Ein weiterer Gegenstand der Erfindung ist ein Verfahren zum Nachweis eines oder mehrerer Analyten in einer Probenflüssigkeit durch Sichtbarmachung von Agglutination, dadurch gekennzeichnet, dass man a) die Probenflüssigkeit mit einem Reagenz in Kontakt bringt, b) das Reaktionsgemisch dem Einwirken von Gravitation, insbesondere durch Zentrifugation oder Magnetismus aussetzt, wobei das Reaktionsgemisch das Kapillarsystem der Vorrichtung nach einem der Ansprüche 1 bis 12 passiert, an welches sich ein Negativ-Gefäß der Vorrichtung nach einem der Ansprüche 1 bis 12 anschließt und c) die Reaktion zwischen dem Analyten und dem Reagenz bestimmt.

In einer besonderen Ausführungsform wird während dem Verfahrensschritt b) das Reaktionsgemisch mit einem weiteren Reagenz in Kontakt gebracht.

In einer weiteren Ausführungsform ist die Reihenfolge der einzelnen Verfahrensschritte aus a) und b) untereinander vertauscht, insbesondere erfolgt das Inkontaktbringen der Probenflüssigkeit mit einem Reagenz erst während des Einwirkens von Gravitation oder Magnetismus. Vorzugsweise umfassen die Probenflüssigkeit und/oder das Reagenz einen oder mehrere Sorten von Partikeln.

Bei dem erfindungsgemäßen Verfahren werden als Partikel insbesondere Erythrozyten, Thrombozyten und/oder Leukozyten bzw. Teile davon eingesetzt oder beispielsweise ein breites Spektrum an synthetischen Partikeln unterschiedlicher Materialien und Dichten, vorzugsweise Polystyrol-Partikel, Polybromstyrol-, magnetische und paramagnetische Partikel, Melamin-, Gelatine-, polymerisierte Agarose, Polymethylmetacrylat- oder andere synthetische Partikel.

Eine positive Reaktion ist dadurch gekennzeichnet, dass Teile des Kapillarsystems nach Zentrifugation sichtbar gefärbt sind. Je weiter oben die Zellen hängen bleiben, desto stärker positiv ist die Reaktion. Die Reaktion wird vorzugsweise mit dem blossen Auge, mit optischen oder elektronischen Verfahren bestimmt.

In besonderen Ausführungsformen weisen die Partikel eine natürliche Färbung auf oder sind gefärbt bzw. farbmarkiert oder radio-, fluoreszenz- und/oder enzymmarkiert. In einer besonderen Ausführungsform werden Partikel zur Verstärkung der Reaktion mit proteolytischen Enzymen vorbehandelt.

Bevorzugte Reagenzien, beispielsweise zum Befüllen des Reagenzapplikations-Kanals, sind insbesondere formulierte Lösungen von monoklonalen, polyklonalen oder rekombinanten Antikörpern bzw. Fragmente davon, die gegen Blutgruppenmerkmale gerichtet sind, anti-Humanglobulin Antikörper bzw. Fragmente davon alleine oder in Kombination mit anti-human Komplement Antikörpern bzw. Fragmenten davon und/oder Pufferlösungen oder Verstärkerlösungen, welche keine Antikörper enthalten.

Ein weiteres bevorzugtes Reagenz umfasst anti-Humanglobulin Antikörper bzw. Fragmente davon alleine oder in Kombination mit anti-human Komplement Antikörpern bzw. Fragmenten davon, wobei die Dichte der Lösung beispielsweise durch Zugabe von Glyzerin, einem Dextran, einem Polyethylenglycol oder anderen künstlichen oder natürlichen Polymeren erhöht wird. Die Erhöhung der Dichte dient dazu, eine Barriere zu schaffen, welche unter den Bedingungen der Zentrifugation Erythrozyten noch passieren lässt, während zellfreies Serum bzw. Plasma zurückgehalten werden. Auf diese Weise wird es möglich, partikelgebundene IgG-Moleküle von nicht partikelgebundenen IgG-Molekülen zu separieren. Der Nachweis partikelgebundener IgG-Partikel findet beispielsweise durch Reaktion mit anti-Humanglobulin-Reagentien, die sich vorzugsweise in der verdichteten Lösung befinden, statt und wird durch Agglutination sichtbar gemacht. Damit dies möglich ist, darf das anti-Humanglobulin-Reagenz nicht vorab durch im Serum/Plasma befindliche und dort im Überschuss vorliegende unspezifische IgG Moleküle neutralisiert werden. Mit diesem Vorgehen wird es möglich, einen indirekten anti-Humanglobulin-Test ohne Waschschritt durchzuführen.

Ein weiterer Gegenstand der Erfindung ist die Anwendung des erfindungsgemäßen Verfahrens, insbesondere zur Bestimmung von Blutgruppen, Antikörpern gegen Blutgruppen, von Verträglichkeiten zwischen Blutkonserve und Empfänger, zur Bestimmung von Thrombozytenmerkmalen und gegen Thrombozyten gerichteten Antikörpern, zur Bestimmung von Leukozytenmerkmalen und gegen Leukozyten gerichteten Antikörpern, zum Nachweis hämagglutinierender Viren, zum Nachweis von Antikörpern gegen Viren, Bakterien, Parasiten, zum Nachweis viraler oder anderer Antigene oder zum Nachweis von Autoantikörpern oder Antikörpern gegen Allergene.

Im Folgenden wird die Erfindung durch Figuren und Beispiele näher erläutert, ohne sie einzuschränken. Es zeigen:
- Fig. 1: eine Darstellung einer erfindungsgemäßen Vorrichtung mit mehreren sich nebeneinander angeordneten Kapillaren in mehreren Kapillarebenen, wobei die Durchmesser der einzelnen Kapillaren der höherliegenden Ebenen grösser sind als diejenigen der tieferliegenden Ebenen.
- Fig. 2: eine Darstellung einer Seitenansicht einer erfindungsgemäßen Vorrichtung mit mehreren Kapillarebenen.
- Fig. 3a: eine Darstellung einer erfindungsgemäßen Vorrichtung mit einer Kapillare einer Kapillarebene.
- Fig. 3b: eine Darstellung einer erfindungsgemäßen Vorrichtung mit einer sich verjüngenden Kapillare einer Kapillarebene.
- Fig. 3c: eine Darstellung einer erfindungsgemäßen Vorrichtung mit drei Kapillarebenen mit jeweils einer Kapillare.
- Fig. 3d: eine Darstellung einer erfindungsgemäßen Vorrichtung mit drei Kapillarebenen mit jeweils einer Kapillare, wobei zwei Kammern zwischengeschaltet sind.
- Fig. 3e: eine Darstellung einer erfindungsgemäßen Vorrichtung mit 3 Kapillaren einer Kapillarebene.
- Fig. 3f: eine Darstellung einer erfindungsgemäßen Vorrichtung mit 4 Kapillaren einer Kapillarebene mit Verbindungsstegen.
- Fig. 3g: eine Darstellung einer erfindungsgemäßen Vorrichtung mit einer Kapillare einer Kapillarebene mit 2 Entlüftungskanälen aus dem Negativ-Gefäß.
- Fig. 4: eine Darstellung mehrerer (sechs) erfindungsgemäßer Vorrichtungen (Reaktoren) in einer Karte mit je einem Entlüftungskanal und verschieden graduierten positiven und negativen Ergebnissen.

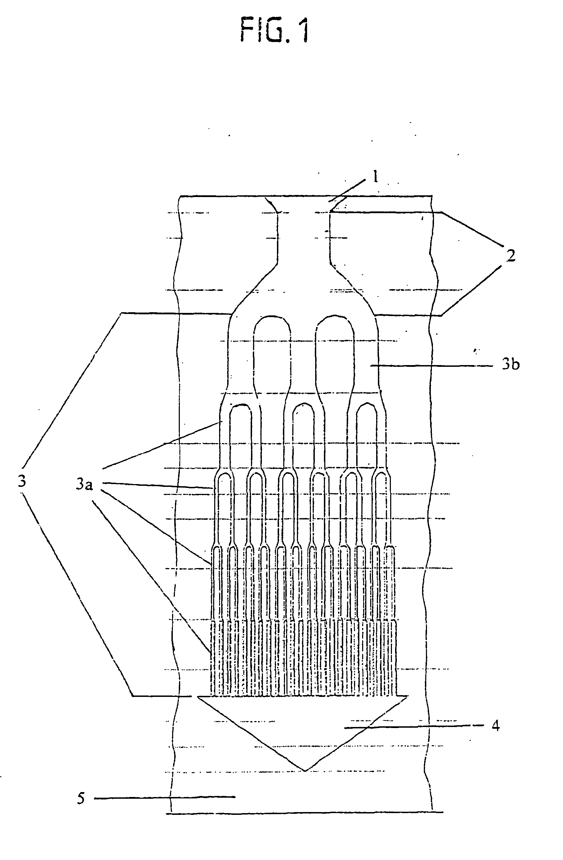

In Fig. 1 wird beispielhaft eine erfindungsgemäße Vorrichtung gezeigt mit dem Ansatz einer Reaktionskammer (1), einem Reagenzapplikations-Kanal (2) einem Kapillarsystem (3), bestehend aus mehreren sich verjüngenden Kapillarebenen (3a), wobei die Durchmesser der einzelnen Kapillaren der höherliegenden Ebenen grösser sind als diejenigen der tieferliegenden Ebenen, mit mehreren Kapillaren (3b), und einem Negativ-Gefäß (4) eingebettet im Trägerelement (5).

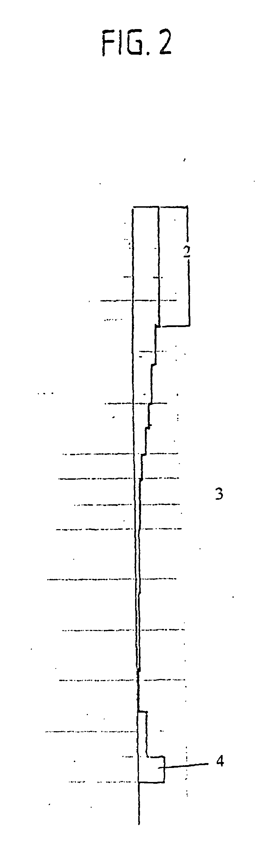

In Fig. 2 wird in Seitenansicht beispielhaft eine erfindungsgemäße Vorrichtung gezeigt mit einem Reagenzapplikations-Kanal (2) einem Kapillarsystem (3), bestehend aus mehreren Kapillarebenen (3a), wobei die Durchmesser der einzelnen Kapillaren der höherliegenden Ebenen grösser sind als diejenigen der tieferliegenden Ebenen, mit mehreren Kapillaren (3b), und einem Negativ-Gefäß (4) eingebettet im Trägerelement.

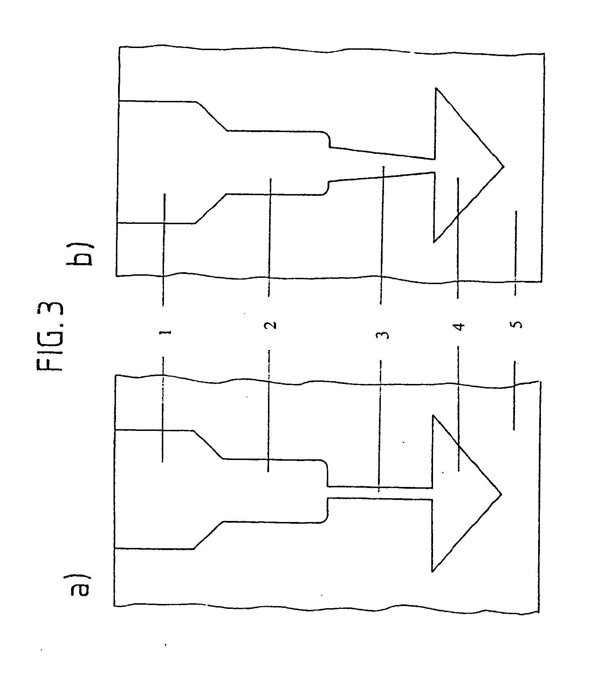

In Fig. 3a wird beispielhaft eine erfindungsgemäße Vorrichtung gezeigt mit einer Reaktionskammer (1), einem Reagenzapplikations-Kanal (2), einem Kapillarsystem (3), bestehend aus einer Kapillare einer Kapillarebene, und einem Negativ-Gefäß (4) eingebettet im Trägerelement (5).

In Fig. 3b wird beispielhaft eine erfindungsgemäße Vorrichtung gezeigt mit einer Reaktionskammer (1), einem Reagenzapplikations-Kanal (2), einem Kapillarsystem (3), bestehend aus einer sich verjüngenden Kapillare einer Kapillarebene, und einem Negativ-Gefäß (4) eingebettet im Trägerelement (5).

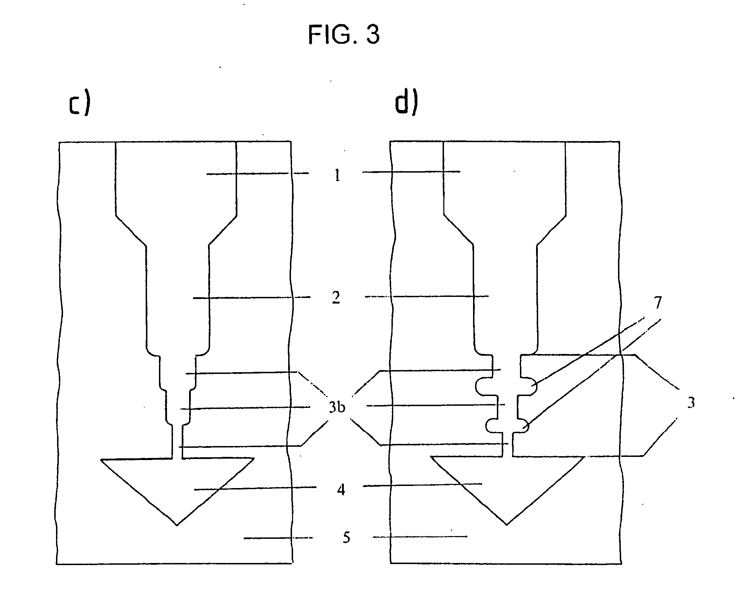

In Fig. 3c wird beispielhaft eine erfindungsgemäße Vorrichtung gezeigt mit einer Reaktionskammer (1), einem Reagenzapplikations-Kanal (2), einem Kapillarsystem (3), bestehend aus drei Kapillarebenen mit jeweils einer Kapillare, und einem Negativ-Gefäß (4) eingebettet im Trägerelement (5).

In Fig. 3d wird beispielhaft eine erfindungsgemäße Vorrichtung gezeigt mit einer Reaktionskammer (1), einem Reagenzapplikations-Kanal (2) einem Kapillarsystem (3), bestehend aus einer drei Kapillarebenen mit jeweils einer Kapillare, die durch Kammern (7) getrennt sind, und einem Negativ-Gefäß (4) eingebettet im Trägerelement (5).

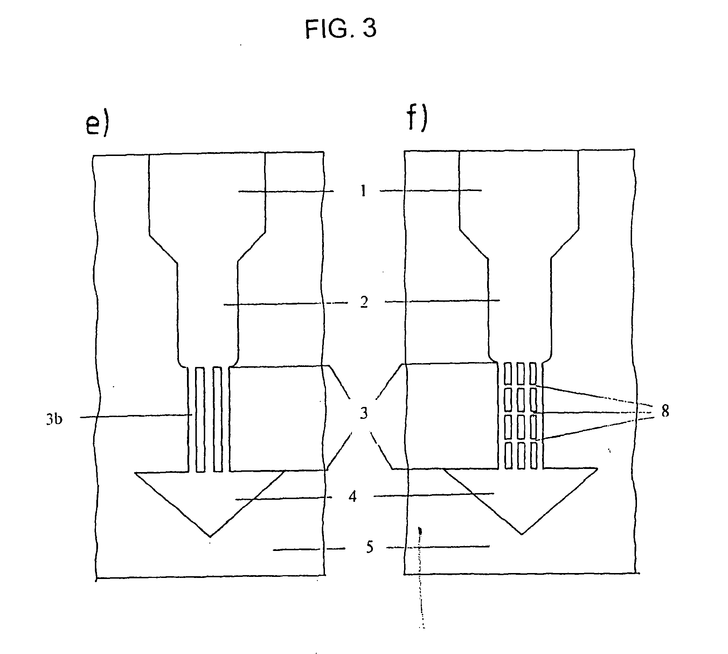

In Fig. 3e wird beispielhaft eine erfindungsgemäße Vorrichtung gezeigt mit einer Reaktionskammer (1), einem Reagenzapplikations-Kanal (2) einem Kapillarsystem (3), bestehend aus drei Kapillaren (3b) in einer Kapillarebene (3a), und einem Negativ-Gefäß (4) eingebettet im Trägerelement (5).

In Fig. 3f wird beispielhaft eine erfindungsgemäße Vorrichtung gezeigt mit einer Reaktionskammer (1), einem Reagenzapplikations-Kanal (2) einem Kapillarsystem (3), bestehend aus vier Kapillaren in einer Kapillarebene, die mit Verbindungsstegen (8) mit einander verbunden sind, und einem Negativ-Gefäß (4) eingebettet im Trägerelement (5).

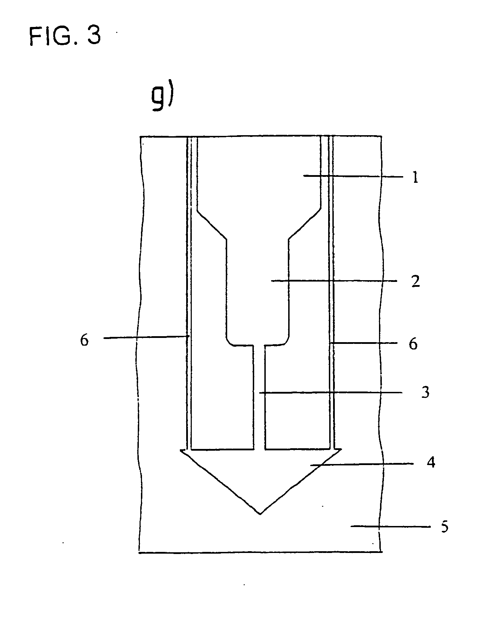

In Fig. 3g wird beispielhaft eine erfindungsgemäße Vorrichtung gezeigt mit einer Reaktionskammer (1), einem Reagenzapplikations-Kanal (2), einem Kapillarsystem (3), bestehend aus einer Kapillare einer Kapillarebene, und einem Negativ-Gefäß (4), von dem aus am oberen Rand zwei Entlüftungskanäle (6) nach oben führen, eingebettet im Trägerelement (5).

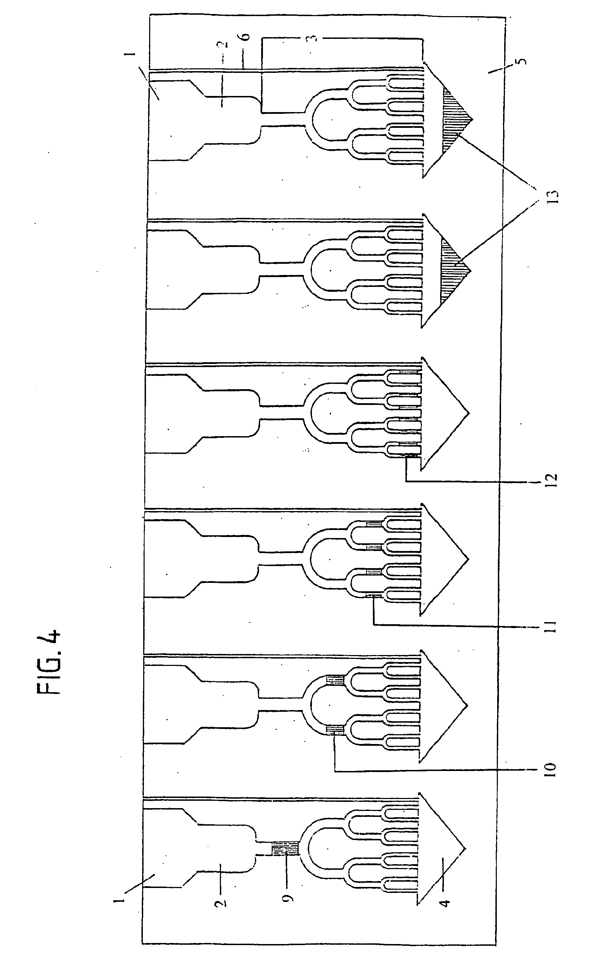

In Fig. 4 wird beispielhaft eine Karte mit sechs erfindungsgemäßen Vorrichtungen (Reaktoren) gezeigt, jeweils mit einer Reaktionskammer (1), einem Reagenzapplikations-Kanal (2) einem Kapillarsystem (3), bestehend aus mehreren Kapillarebenen mit mehreren Kapillaren, wobei die Durchmesser der einzelnen Kapillaren der höherliegenden Ebenen grösser sind als diejenigen der tieferliegenden Ebenen, und einem Negativ-Gefäß (4), von dem aus am oberen Rand ein Entlüftungskanal (6) nach oben führt, eingebettet im Trägerelement (5). Die einzelnen Reaktoren der Karte zeigen verschieden graduierte positive Ergebnisse im Kapillarsystem (3), nämlich eine stark positive Reaktion (9), eine positive Reaktion (10), eine schwächer positive Reaktion (11) und eine schwach positive Reaktion (12), und negative Reaktionen (13) im Negativ-Gefäß (4).

### Beispiele

### 1. Blutgruppenbestimmung

a) Beide Reaktionspartner werden in das Reaktionsgefäss pipettiert.
   In einen Reagenz-Applikationskanal eines Trägerelements werden 5 µl eines Phosphatpuffers pipettiert. Es wird in einer ID-Centrifuge (DiaMed) zentrifugiert (10 min, 85 g). 25 µl einer auf 0.8 % verdünnten Suspension von Blutgruppe A Zellen (ReverseCyte A1, Medion Diagnostics) werden in die Reaktionskammer pipettiert, gefolgt von 5 µl anti-A (BIRMA-1, Serologicals). Die Karte wird erneut in der ID-Centrifuge zentrifugiert. Ergebnis: die Hämagglutinate werden im Kapillarsystem zurückgehalten. Das Negativgefäss bleibt frei von Zellen. Werden anstelle der ReverseCyte A 1 Zellen ReverseCyte B Zellen verwendet, sammeln sich die Zellen nach der Zentrifugation sichtbar im unteren Bereich des Negativgefässes.
b) Agglutinationsreagenz vorpipettiert
   In einen Reagenz-Applikationskanal eines Trägerelements werden 5 µl anti-A (BIRMA-1, Serologicals) pipettiert. Die Karte wird in einer ID-Centrifuge zentrifugiert (10 min, 85 g). 25 µl einer auf 0.8 % verdünnten Suspension von Blutgruppe A Zellen (ReverseCyte A1, Medion Diagnostics) werden in die Reaktionskammer pipettiert. Die Karte wird erneut in der ID-Centrifuge zentrifugiert. Ergebnis: die Hämagglutinate werden im Kapillarsystem zurückgehalten. Das Negativgefäss bleibt frei von Zellen. Werden anstelle der ReverseCyte A1 Zellen ReverseCyte B Zellen verwendet, sammeln sich die Zellen nach der Zentrifugation sichtbar im unteren Bereich des Negativgefässes.
c) Agglutinationsreagenz vorpipettiert, Vollblut verdünnt in Bromelinreagenz
   In einen Reagenz-Applikationskanal eines Trägerelements werden 5 µl anti-A (BIRMA-1, Serologicals) pipettiert. Die Karte wird in einer ID-Centrifuge zentrifugiert (10 min, 85 g). 50 µl einer Suspension anticoagulierten Vollbluts einer Person mit Blutgruppe A werden mit 500 µl eines Bromelin-Reagens (Diluent 1, DiaMed) gemischt und 10 Minuten bei Raumtemperatur stehen gelassen. Danach werden 10 µl dieser Suspension in die Reaktionskammer pipettiert. Die Karte wird sofort in der ID-Centrifuge zentrifugiert. Ergebnis: die Hämagglutinate werden im Kapillarsystem zurückgehalten. Das Negativgefäss bleibt frei von Zellen. Werden anstelle der Blutgruppe A Zellen Blutgruppe B Zellen verwendet, sammeln sich die Zellen nach der Zentrifugation sichtbar im unteren Bereich des Negativgefässes.
d) Agglutinationsreagenz vorpipettiert aber nicht vorzentrifugiert, Vollblut verdünnt in Bromelinreagenz
   In einen Reagenz-Applikationskanal eines Trägerelements werden 5 µl anti-A (BIRMA-1, Serologicals) pipettiert. 50 µl einer Suspension anticoagulierten Vollbluts einer Person mit Blutgruppe A werden mit 500 µl eines Bromelin-Reagens (Diluent 1, DiaMed) gemischt und 10 Minuten bei Raumtemperatur stehen gelassen. Danach werden 10 µl dieser Suspension in die Reaktionskammer pipettiert. Die Karte wird sofort in der ID-Centrifuge zentrifugiert. Ergebnis: die Hämagglutinate werden im Kapillarsystem zurückgehalten. Das Negativgefäss bleibt frei von Zellen. Werden anstelle der Blutgruppe A Zellen Blutgruppe B Zellen verwendet, sammeln sich die Zellen nach der Zentrifugation sichtbar im unteren Bereich des Negativgefässes.
e) Bestimmung schwacher Blutgruppenmerkmale im Antihumanglobulin-Test: Dweak
   In einen Reagenz-Applikationskanal eines Trägerelements werden 5 µl anti-IgG in PBS, pH 7.4, 10 % Glyzerin, pipettiert. Die Karte wird in einer ID-Centrifuge zentrifugiert (10 min, 85 g). 50 µl einer Suspension anticoagulierten Vollbluts einer Person mit Blutgruppe D in schwacher Ausprägung (Dweak) werden mit 500 µl einer Verdünnungslösung (Diluent 2, DiaMed) gemischt. Von dieser Suspension werden 25 µl in die Reaktionskammer pipettiert, gefolgt von 25 µl eines kommerziellen IgGanti-D Produkts (ESD-1, DiaMed). Es wird für 15 min bei 37 °C inkubiert und in der ID-Centrifuge zentrifugiert. Ergebnis: Die Erythrozyten werden hämagglutiniert und die Hämagglutinate werden im Kapillarsystem zurückgehalten. Das Negativgefäss bleibt frei von Zellen. Werden anstelle der Blutgruppe D positiven Zellen Blutgruppe D negative Zellen verwendet, sammeln sich die Zellen nach der Zentrifugation sichtbar im unteren Bereich des Negativgefässes.

### 2. Serumgegenprobe

In die Reagenz-Applikationskanäle eines Trägerelements werden 5 µl eines niederionischen Puffers (DiaMed, Diluent 2) pipettiert. Danach werden 10 µl je einer Suspension von A1, A2, B, O-Testzellen (DiaMed; ID-DiaCell AB0) in 4 verschiedene Reaktionskammern des Trägerelements pipettiert, darauf werden 10 µl des Plasmas einer zu testenden Person mit Blutgruppe A in die Reaktionskammer dazupipettiert und das Gemisch wird 10 Minuten bei Raumtemperatur (18 bis 25 °C) inkubiert. Die Karte wird in der ID-Centrifuge zentrifugiert. Ergebnis: Die B-Zellen reagieren positiv, die Hämagglutinate werden im Kapillarsystem zurückgehalten. Das Negativgefäss dieses Reaktors bleibt frei von Zellen. Die drei anderen Zellen (A1, A2, O), die nicht mit den Isoagglutininen im verwendeten Plasma reagieren, sammeln sich nach der Zentrifugation sichtbar im unteren Bereich des Negativgefässes.

### 3. Antikörpersuch-Tests

a) Indirekter Antihumanglobulin Test (Indirekter Coombs-Test)
   In einen Reagenz-Applikationskanal eines Trägerelements werden 5 µl eines Gemischs aus anti-IgG und anti-C3d (Medion Diagnostics), das mit 10 % Glyzerin (w/v) verdichtet wurde, pipettiert. Die Karte wird in einer ID-Centrifuge zentrifugiert (10 min, 85 g). 25 µl einer Blutgruppe O Testzelle für den Antikörper-Suchtest (ScreenCyte 0.8 % I, II, III, Medion Diagnostics) werden in die Reaktionskammer pipettiert, gefolgt von 25 µl Patientenserum. Es wird für 15 min bei 37 ° C inkubiert und in der ID-Centrifuge zentrifugiert. Ergebnis: Enthält das Patientenserum einen irregulären Antikörper, der gegen ein auf einer der Zellen vorhandenes Antigen gerichtet ist, dann werden die Erythrozyten der entsprechenden Testzellen hämagglutiniert und die Hämagglutinate im Kapillarsystem zurückgehalten. Enthält das Patientenserum keinen irregulären Antikörper, der gegen ein auf einer der Zellen vornandenes Antigen gerichtet ist, dann werden die Erythrozyten nicht hämagglutiniert. Sie sammeln sich nach der Zentrifugation als sichtbarer roter "Knopf" im unteren Bereich des Negativgefässes.
b) Enzym-Test
   i) Einphasen-Test
      In die Reagenz-Applikationskanäle eines Trägerelements werden 5 µl eines Phosphatpuffers, pH 7.4, pipettiert. Die Karte wird in einer ID-Centrifuge zentrifugiert (10 min, 85 g). 25 µl einer Blutgruppe O Testzelle für den Antikörper-Suchtest (Screencyte I, II, III) werden in die Reaktionskammer pipettiert, gefolgt von 25 µl eines Enzym-Reagens (Diluent 1, DiaMed) und 25 µl Patientenserum. Es wird für 15 min bei 37 ° C inkubiert und in der ID-Centrifuge zentrifugiert. Ergebnis: Enthält das Patientenserum einen irregulären Antikörper, der gegen ein auf einer der Zellen vorhandenes Antigen gerichtet ist, dann werden die Erythrozyten der entsprechenden Testzellen hämagglutiniert und die Hämagglutinate im Kapillarsystem zurückgehalten. Enthält das Patientenserum keinen irregulären Antikörper, der gegen ein auf einer der Zellen vorhandenes Antigen gerichtet ist, dann werden die Erythrozyten nicht hämagglutiniert. Sie sammeln sich nach der Zentrifugation als sichtbarer roter "Knopf" im unteren Bereich des Negativgefässes.
   ii) Zweiphasen-Test
      In die Reagenz-Applikationskanäle eines Trägerelements werden 5 µl eines Phosphatpuffers, pH 7.4, pipettiert. Die Karte wird in einer ID-Centrifuge zentrifugiert (10 min, 85 g). 25 µl einer papainisierten Blutgruppe O Testzelle für den Antikörper-Suchtest (ID-DiaCell IP, IIP, IIIP, DiaMed) werden in die Reaktionskammer pipettiert, gefolgt von 25 µl Patientenserum. Es wird für 15 min bei 37 ° C inkubiert und in der ID-Centrifuge zentrifugiert. Ergebnis: Enthält das Patientenserum einen irregulären Antikörper, der gegen ein auf einer der Zellen vorhandenes Antigen gerichtet ist, dann werden die Erythrozyten der entsprechenden Testzellen hämagglutiniert und die Hämagglutinate im Kapillarsystem zurückgehalten. Enthält das Patientenserum keinen irregulären Antikörper, der gegen ein auf einer der Zellen vorhandenes Antigen gerichtet ist, dann werden die Erythrozyten nicht hämagglutiniert. Sie sammeln sich nach der Zentrifugation als sichtbarer roter "Knopf" im unteren Bereich des Negativgefässes.
c) Verträglichkeitstest (Kreuzprobe)
   In einen Reagenz-Applikationskanal eines Trägerelements werden 5 µl eines Gemischs aus anti-IgG und anti-C3d (Medion Diagnostics), das mit 10 % Glyzerin (w/v) verdichtet wurde, pipettiert. Die Karte wird in einer ID-Centrifuge zentrifugiert (10 min, 85 g). Das Blut einer Konserve wird verdünnt, indem 10 µl Zellsediment mit 1 mL einer Verdünnungslösung (Diluent 2, DiaMed) gemischt werden. Darauf werden 25 µl des verdünnten Konservenbluts in die Reaktionskammer pipettiert, gefolgt von 25 µl Patientenserum. Es wird für 15 min bei 37 °C inkubiert und in der ID-Centrifuge zentrifugiert. Ergebnis: Enthält das Patientenserum einen Antikörper, der gegen ein Antigen der Erythrozyten des Konservenblutes gerichtet ist, dann werden diese hämagglutiniert und die Hämagglutinate im Kapillarsystem zurückgehalten (Spender und Empfänger inkompatibel). Enthält das Patientenserum keinen unverträglichen Antikörper, sammeln sich die Erythrozyten nach der Zentrifugation als sichtbarer roter "Knopf" im unteren Bereich des Negativgefässes.

### 4. Direkter Antihumanglobulin-Test (Direkter Coombs-Test)

In einen Reagenz-Applikationskanal eines Trägerelements werden 5 µl eines Gemischs aus anti-IgG und anti-C3d (Medion Diagnostics), das mit 10 % Glyzerin (w/v) verdichtet wurde, pipettiert. Die Karte wird in einer ID-Centrifuge zentrifugiert (10 min, 85 g). 10 µl einer mit IgG beladenen Coombs-Kontrollzelle (Coombs Control, Medion Diagnostics) werden in die Reaktionskammer pipettiert. Es wird sofort in der ID-Centrifuge zentrifugiert. Ergebnis: Da die Coombs Kontrollzelle mit IgG Antikörpern beladen ist, werden die Erythrozyten hämagglutiniert und die Hämagglutinate im Kapillarsystem zurückgehalten. Nicht IgG-beladene Zellen sammeln sich nach der Zentrifugation als sichtbarer roter "Knopf" im unteren Bereich des Negativgefässes.

### 5. Partikel-Agglutination mit Zentrifugation: Nachweis von Antikörpern gegen T. pallidum

In einen Reagenz-Applikationskanal eines Trägerelements werden 5 µl eines anti-human IgG (Medion Diagnostics), das mit 10 % Glyzerin (w/v) verdichtet wurde, pipettiert. Die Karte wird in einer ID-Centrifuge zentrifugiert (10 min, 85 g). Ein mit rekombinanten *T. pallidum* Antigenen (TpN15, TpN 17, TpN 47) beschichtetes Partikel-Reagenz (DiaMed, Syphilis polymer particles) wird während 5 sec auf höchster Stufe gevortext. Dann werden 5 µl eines Patientenserums sowie 25 µl des Partikel-Reagenz in die Reaktionskammer pipettiert. Nach 5 min Inkubation bei Raumtemperatur wird in der ID-Centrifuge zentrifugiert. Ergebnis: Patientenseren, welche Antikörper gegen eines oder mehrere der Syphilisantigene auf den Partikeln enthalten, agglutinieren die Partikel, so dass sie in ähnlicher Weise wie Erythrozyten im Kapillarsystem zurückgehalten werden. Seren von nicht infizierten Personen agglutinieren die Partikel nicht. Dadurch sedimentieren die freien Partikel während der Zentrifugation als sichtbarer bräunlicher "Knopf" in den unteren Bereich des Negativgefässes.

### 6. Partikel-Agglutination mit magnetischer Separation: Nachweis von Antikörpern gegen T. pallidum

In einen Reagenz-Applikationskanal eines Trägerelements werden 5 µl eines anti-human IgG (Medion Diagnostics), das mit 10 % Glyzerin (w/v) verdichtet wurde, pipettiert. Die Karte wird in einer ID-Centrifuge zentrifugiert (10 min, 85 g). Mit rekombinanten *T. pallidum* Antigenen (TpN15, TpN 17, TpN 47) beschichtete Paramagnetische Partikel (estapor microspheres, Frankreich) werden während 5 sec auf höchster Stufe gevortext. Dann werden 5 µl eines Patientenserums sowie 25 µl des Partikel-Reagenz in die Reaktionskammer pipettiert. Nach 5 min Inkubation bei Raumtemperatur wird ein Magnet (LifeSep 1.5 S Magnetic Separation Unit, Dexter Magnetic Technologies, USA) an die Basis des Negativgefässes gehalten. Ergebnis: Patientenseren, welche Antikörper gegen eines oder mehrere der Syphilisantigene auf den Partikeln enthalten, agglutinieren die Partikel, so dass sie in ähnlicher Weise wie Erythrozyten im Kapillarsystem zurückgehalten werden. Seren von nicht infizierten Personen agglutinieren die Partikel nicht. Dadurch sedimentieren die freien Partikel als sichtbarer bräunlicher "Knopf" in den unteren Bereich des Negativgefässes.

### 7. Bestimmung von Humanem Parvovirus B19 Antigen

In einen Reagenz-Applikationskanal eines Trägerelements werden 5 µl eines PBS-Puffers, der auf pH 5.8 titriert wurde, pipettiert. Danach werden 10 µl einer Suspension papainisierter Testzellen, die das Blutgruppenantigen P tragen in die Reaktionskammer pipettiert, darauf werden 10 µl einer Lösung von rekombinanten VP2 Partikeln in die Reaktionskammer dazupipettiert und das Gemisch sofort in der ID-Centrifuge zentrifugiert. Ergebnis: Die Zellen werden hämagglutiniert, die Hämagglutinate werden im Kapillarsystem zurückgehalten. Das Negativgefäss dieses Reaktors bleibt frei von Zellen. Wird anstelle der VP2 Partikel das Serum einer nicht viramischen Person eingesetzt, sammeln sich die Erythozyten nach der Zentrifugation sichtbar im unteren Bereich des Negativgefässes.

## Patentansprüche

1. Vorrichtung zum Nachweis eines oder mehrerer Analyten in einer Probe, umfassend eine oder mehrere, zur Aufnahme einer Probe geeignete Reaktionskammern (1) sowie optional einen oder mehrere Reagenzapplikations-Kanäle (2), mit einem oder mehreren, an die Reaktionskammern (1) oder den Reagenzapplikations-Kanälen (2) sich anschließenden Kapillarsystemen (3), wobei sich ein oder mehrere Negativ-Gefäße (4) an das oder die Kapillarsysteme (3) anschließen, wobei ein Kapillarsystem (3) mindestens eine Kapillare (3b) einer Kapillarebene (3a) umfasst oder eine oder mehrere Kapillaren (3b) umfasst, die in eine oder mehrere Kapillarebenen (3a) verjüngt sind.

2. Vorrichtung nach Anspruch 1, wobei das Kapillarsystem (3) sich verjüngenden Kapillarebenen (3a) umfasst, welche untereinander angeordnet sind.

3. Vorrichtung nach einem der Ansprüche 1 bis 2, wobei in jeder Kapillarebene (3b) mehrere Kapillaren (3b) nebeneinander angeordnet oder gebündelt sind.

4. Vorrichtung nach einem der Ansprüche 1 bis 3, wobei nebeneinander oder gebündelt angeordnete Kapillaren (3b) einer Kapillarebene (3a) Verbindungsstege (8) aufweisen.

5. Vorrichtung nach einem der Ansprüche 1 bis 4, wobei nebeneinander oder gebündelt angeordnete Kapillaren (3b) einer Kapillarebene (3a) die gleiche Durchtrittsfläche besitzen.

6. Vorrichtung nach einem der Ansprüche 1 bis 5, wobei die Durchtrittsfläche der Kapillarebenen (3a) umso kleiner wird, je weiter distal sie von der Reaktionskammer (1) angeordnet sind.

7. Vorrichtung nach einem der Ansprüche 1 bis 6, wobei die Kapillarebenen (3a) des Kapillarsystems (3) durch Kammern verbunden sind, deren Durchtrittsfläche vorzugsweise genauso groß ist, wie diejenige der größten Kapillare (3b).

8. Vorrichtung nach einem der Ansprüche 1 bis 7, wobei der Reagenzapplikations-Kanal (2) das 1,2-fache Volumen im Vergleich zur Kapillare (3b) bzw. Kapillarsystem (3) plus Negativ-Gefäß (4) umfasst.

9. Vorrichtung nach einem der Ansprüche 1 bis 8, wobei das Negativ-Gefäß (4) ein größeres Volumen aufweist, als das Volumen des gepackten Sediments der eingesetzten Zellen oder Partikel.

10. Vorrichtung nach einem der Ansprüche 1 bis 9, wobei das Negativ-Gefäß (4) eine nach unten schmaler werdende Form, beispielhaft pfeilartig zugespitzt oder U-förmig, aufweist.

11. Vorrichtung nach einem der Ansprüche 1 bis 10, von der ein oder mehrere Entlüftungskanal/-kanäle (6), vorzugsweise vom oberen, breiteren Teil des Negativ-Gefäßes, abzweigt/abzweigen.

12. Vorrichtung nach einem der Ansprüche 1 bis 11, wobei das Kapillarsystem (3) integraler Bestandteil des Trägerelements (5) ist.

13. Verfahren zum Nachweis eines oder mehrerer Analyten in einer Probenflüssigkeit durch Sichtbarmachung von Agglutination, **dadurch gekennzeichnet, dass** man
a) die Probenflüssigkeit mit einem Reagenz in Kontakt bringt,
b) das Reaktionsgemisch dem Einwirken von Gravitation oder Magnetismus aussetzt, wobei das Reaktionsgemisch das Kapillarsystem der Vorrichtung nach einem der Ansprüche 1 bis 12 passiert, an welches sich ein Negativ-Gefäß der Vorrichtung nach einem der Ansprüche 1 bis 12 anschließt
und
c) die Reaktion zwischen dem Analyten und dem Reagenz bestimmt.

14. Verfahren nach Anspruch 13, wobei während des Verfahrensschritts b) das Reaktionsgemisch mit einem weiteren Reagenz in Kontakt gebracht wird.

15. Verfahren nach Anspruch 14, wobei die Reihenfolge der einzelnen Verfahrensschritte aus a) und b) untereinander vertauscht wird, insbesondere das Inkontaktbringen der Probenflüssigkeit mit einem Reagenz erst während dem Einwirken von Gravitation oder Magnetismus erfolgt.

16. Verfahren nach einem der Ansprüche 13 bis 15, wobei die Probenflüssigkeit und/oder das Reagenz ein oder mehrere Partikel umfasst.

17. Verfahren nach einem der Ansprüche 13 bis 16, wobei die Reaktion optisch bestimmt wird.

18. Verfahren nach einem der Ansprüche 13 bis 17, wobei die Partikel eine natürliche Färbung aufweisen oder gefärbt sind.

19. Verfahren nach einem der Ansprüche 13 bis 18, wobei die Partikel farb-, radio-, fluoreszenz- oder enzymmarkiert sind.

20. Verfahren nach einem der Ansprüche 13 bis 19, wobei die Partikel Erythrozyten und/oder Thrombozyten und/oder Leukozyten bzw. Teile davon umfassen.

21. Verfahren nach einem der Ansprüche 13 bis 20, wobei die Partikel zur Verstärkung der Reaktion mit proteolytischen Enzymen vorbehandelt werden.

22. Verfahren nach einem der Ansprüche 13 bis 21, wobei Antikörper insbesondere gegen Peptide, Proteine, Kohlenhydrate, Lipide, Nukleinsäuren, Viren, Bakterien, Parasiten, menschliche Zellen, tierische Zellen oder pflanzliche Zellen bzw. Teile davon an die Partikel gebunden sind.

23. Verfahren nach einem der Ansprüche 13 bis 22, wobei Antigene oder andere Liganden, wie z.B. Peptide, Proteine, Kohlenhydrate, Lipide, Nukleinsäuren, Viren, Bakterien, Parasiten, menschliche Zellen, tierische Zellen, pflanzliche Zellen oder Allergene bzw. Teile davon an die Partikel gebunden sind.

24. Verfahren nach einem der Ansprüche 13 bis 23, wobei die Partikel insbesondere Polystyrol, Polybromstyrol, Gelatine, Melamin, polymerisierter Agarose oder Polymethylmetacrylat umfassen.

25. Verfahren einem der Ansprüche 13 bis 24, wobei die Partikel magnetisch oder paramagnetisch sind.

26. Verfahren nach einem der Ansprüche 13 bis 25, wobei die Probenmischung der Gravitation ausgesetzt wird, indem sie einer Zentrifugation unterworfen wird.

27. Verfahren nach einem der Ansprüche 13 bis 26, wobei die Probenmischung Magnetismus ausgesetzt wird.

28. Verfahren nach einem der Ansprüche 13 bis 27, wobei die Probenflüssigkeit menschliches, tierisches oder pflanzliches Material umfasst, insbesondere Blut oder Blutbestandteile.

29. Verfahren nach einem der Ansprüche 13 bis 28, wobei das Reagenz insbesondere Antikörper, Testzellen, synthetische Partikel, Puffer oder Verstärkerlösungen, umfasst.

30. Verfahren nach einem der Ansprüche 13 bis 29, wobei dem Reagenz Glyzerin oder andere Moleküle zur Erhöhung der spezifischen Dichte der Lösung zugefügt werden.

31. Verwendung der Vorrichtung nach einem der Ansprüche 1 bis 12 insbesondere in der blutgruppenserologischen Diagnostik, vorzugsweise zur Bestimmung von Blutgruppen, Antikörpern gegen Blutgruppenmerkmale, von Verträglichkeiten zwischen Blutkonserve und Empfänger, zur Bestimmung von Thrombozytenmerkmalen und gegen Thrombozyten gerichteten Antikörpern, zur Bestimmung von Leukozytenmerkmalen und gegen Leukozyten gerichteten Antikörpern, zum Nachweis hämagglutinierender Viren, zum Nachweis von Antikörpern gegen Proteine, Viren, Bakterien, Parasiten, zum Nachweis viraler oder bakterieller oder parasitärer oder anderer Antigene und/oder zum Nachweis von Autoantikörpern und gegen Allergene gerichteten Antikörpern.

## Claims

1. Device for detecting one or more analytes in a sample, comprising one or more reaction chambers (1), suited to receive a sample, as well as, optionally, one or more reagent application channels (2), including one or more capillary systems (3) following onto the reaction chambers (1) or the reagent application channels (2), wherein one or more negative vessels (4) following onto the capillary system or the capillary systems (3), and wherein a capillary system (3) includes at least one capillary (3b) of a capillary plane (3a) or one or more capillaries (3b), which present a diminished cross-section in one or more capillary planes (3a).

2. Device according to claim 1, wherein the capillary system (3) includes capillary planes (3a) of diminishing cross-section, which are disposed one below the other.

3. Device according to any one of claims 1 to 2, wherein in each capillary plane (3b) a plurality of capillaries (3b) are arranged in an adjoining or bundled fashion.

4. Device according to any one of claims 1 to 3, wherein adjoining or bundled capillaries (3b) of a capillary plane (3a) include connecting webs (8).

5. Device according to any one of claims 1 to 4, wherein adjoining or bundled capillaries (3b) of a capillary plane (3a) have the same inner cross-sectional area.

6. Device according to any one of claims 1 to 5, wherein, the more distant the inner cross-sectional area of the capillary planes (3a) is disposed from the reaction chamber (1), the smaller it becomes.

7. Device according to any one of claims 1 to 6, wherein the capillary planes (3a) of the capillary system (3) are connected by chambers, whose inner cross-sectional area is preferably the same as that of the largest capillary (3b).

8. Device according to any one of claims 1 to 7, wherein the reagent application channel (2) has 1.2 times the volume compared with the capillary (3b) or the capillary system (3) plus negative vessel (4).

9. Device according to any one of claims 1 to 8, wherein the negative vessel (4) has a larger volume than the volume of the compacted sediment of the cells or particles used.

10. Device according to any one of claims 1 to 9, wherein the negative vessel (4) has a shape, which tapers towards the bottom, for example pointed like an arrow or U-shaped.

11. Device according to any one of claims 1 to 10, from which one or a plurality of ventilation channel(s) (6) branches/branch off, preferably from the upper, wider portion of the negative vessel.

12. Device according to any one of claims 1 to 11, wherein the capillary system (3) forms an integral component of the carrier element (5).

13. Method for detecting one or more analytes in a sample fluid by the visualisation of agglutination, **characterised in that**
a) the sample fluid is brought into contact with a reagent,
b) the reaction mixture is exposed to the effects of gravitation or magnetism, the reaction mixture passing through the capillary system of the device according to one of claims 1 to 12, followed by a negative vessel of the device according to one of claims 1 to 12
and
c) the reaction between the analyte and the reagent is determined.

14. Method according to claim 13, wherein the reaction mixture is brought into contact with a further reagent during process step b).

15. Method according to claim 14, wherein the order of the individual process steps consisting of a) and b) are reversed, in particular when the sample fluid is brought into contact with a reagent only during the action of gravitation or magnetism.

16. Method according to any one of claims 13 to 15, wherein the sample fluid and/or the reagent include one or more particles.

17. Method according to any one of claims 13 to 16, wherein the reaction is determined optically.

18. Method according to any one of claims 13 to 17, wherein the particles have a natural colour or are coloured.

19. Method according to any one of claims 13 to 18, wherein the particles are colour-, radio-, fluorescent- or enzyme-coded.

20. Method according to any one of claims 13 to 19, wherein the particles include erythrocytes and/or thrombocytes and/or leucocytes or parts thereof.

21. Method according to any one of claims 13 to 20, wherein the particles are pre-treated with proteolytic enzymes in order to enhance the reaction.

22. Method according to any one of claims 13 to 21, wherein antibodies, in particular peptides, proteins, carbohydrates, lipids, nucleic acids, viruses, bacteria, parasites, human cells, animal cells or plant cells or parts thereof are bound to the particles.

23. Method according to any one of claims 13 to 22, wherein antigens or other ligands, such as, e.g. peptides, proteins, carbohydrates, lipids, nucleic acids, viruses, bacteria, parasites, human cells, animal cells, plant cells or allergens or parts thereof are bound to the particles.

24. Method according to any one of claims 13 to 23, wherein the particles in particular comprise polystyrene, polybromostyrene, gelatine, melamine, polymerised agarose or polymethyl methacrylate.

25. Method according to any one of claims 13 to 24, wherein the particles are magnetic or paramagnetic.

26. Method according to any one of claims 13 to 25, wherein the sample mixture is exposed to gravitation by being subjected to centrifuging.

27. Method according to any one of claims 13 to 26, wherein the sample mixture is exposed to magnetism.

28. Method according to any one of claims 13 to 27, wherein the sample fluid comprises human, animal or plant material, in particular blood or blood components.

29. Method according to any one of claims 13 to 28, wherein the reagent comprises in particular antibodies, test cells, synthetic particles, buffers or booster solutions.

30. Method according to any one of claims 13 to 29, wherein glycerine or other molecules are added to the reagent in order to increase the specific density of the solution.

31. Use of the device according to an one of claims 1 to 12, in particular in blood group serological diagnostics, preferably for determining blood groups, antibodies against blood group characteristics, of compatibilities between stored blood and recipients, for determining thrombocyte characteristics and antibodies directed against thrombocytes, for determining leucocyte characteristics and antibodies directed against leucocytes, for detecting haemagglutinating viruses, for detecting antibodies against proteins, viruses, bacteria, parasites, for detecting viral or bacterial or parasitic or other antigens and/or for detecting auto-antibodies and antibodies directed against allergens.

## Revendications

1. Dispositif pour la détection d'un ou plusieurs analytes dans un échantillon, comprenant une ou plusieurs chambres de réaction (1), convenant à la réception d'un échantillon, et aussi en option un ou plusieurs canaux (2) d'application de réactifs, avec un ou plusieurs systèmes de capillaires (3), se raccordant aux chambres de réaction (1) ou aux canaux (2) d'application de réactifs, un ou plusieurs récipients négatifs (4) étant raccordés au ou aux systèmes de capillaires (3), un système de capillaires (3) comprenant au moins un capillaire (3b) d'un plan de capillaires (3a), ou comprenant un ou plusieurs capillaires (3b) qui s'amincissent en passant dans un ou plusieurs plans de capillaires (3a).

2. Dispositif selon la revendication 1, dans lequel le système de capillaires (3) comprend des plans de capillaires (3a) qui s'amincissent, et qui sont disposés les uns en dessous des autres.

3. Dispositif selon l'une des revendications 1 à 2, dans lequel plusieurs capillaires (3b) sont disposés les uns à côté des autres, ou regroupés en faisceaux, dans chaque plan de capillaires (3b).

4. Dispositif selon l'une des revendications 1 à 3, dans lequel des capillaires (3b), disposés les uns à côté des autres ou regroupés en faisceaux, d'un plan de capillaires (3a) comprennent des traverses de raccordement (8).

5. Dispositif selon l'une des revendications 1 à 4, dans lequel les capillaires (3b), disposés les uns à côté des autres ou regroupés en faisceaux, d'un plan de capillaires (3a) ont des surfaces de passage de même aire.

6. Dispositif selon l'une des revendications 1 à 5, dans lequel l'aire de la surface de passage des plans de capillaires (3a) devient d'autant plus petite qu'ils sont disposés plus loin, dans la direction distale, de la chambre de réaction (1).

7. Dispositif selon l'une des revendications 1 à 6, dans lequel les plans de capillaires (3a) du système de capillaires (3) sont reliés par des chambres dont la surface de passage a de préférence une aire exactement égale à celle des capillaires (3b) les plus gros.

8. Dispositif selon l'une des revendications 1 à 7, dans lequel le canal (2) d'application de réactifs a un volume 1,2 fois plus grand que celui des capillaires (3b) ou du système de capillaires (3) augmenté de celui du récipient négatif (4).

9. Dispositif selon l'une des revendications 1 à 8, dans lequel le récipient négatif (4) a un volume plus grand que le volume, après tassement, du sédiment des cellules ou des particules utilisées.

10. Dispositif selon l'une des revendications 1 à 9, dans lequel le récipient négatif (4) présente une forme qui se rétrécit vers le bas, en s'effilant par exemple comme une flèche, ou en forme de U.

11. Dispositif selon l'une des revendications 1 à 10, à partir duquel partent un ou plusieurs canaux (6) de désaérage, de préférence à partir de la partie supérieure la plus large du récipient négatif.

12. Dispositif selon l'une des revendications 1 à 11, dans lequel le système de capillaires (3) fait partie intégrante de l'élément support (5).

13. Procédé pour détecter un ou plusieurs analytes dans un liquide échantillon, par visualisation de l'agglutination, **caractérisé en ce que**
a) on met le liquide échantillon en contact avec un réactif,
b) on expose le mélange réactionnel à l'action de la gravitation ou du magnétisme, le mélange réactionnel passant par le système de capillaires du dispositif selon l'une des revendications 1 à 12, auquel est raccordé un récipient négatif du dispositif selon l'une des revendications 1 à 12, et
c) on détermine la réaction entre l'analyte et le réactif.

14. Procédé selon la revendication 13, dans lequel, pendant l'étape b), on met le mélange réactionnel en contact avec un réactif supplémentaire.

15. Procédé selon la revendication 14, dans lequel on permute l'ordre des étapes individuelles a) et b), et en particulier la mise en contact du liquide échantillon avec un réactif n'a lieu que pendant l'action de la gravitation ou du magnétisme.

16. Procédé selon l'une des revendications 13 à 15, dans lequel le liquide échantillon et/ou le réactif comprennent une ou plusieurs particules.

17. Procédé selon l'une des revendications 13 à 16, dans lequel la réaction est déterminée par voie optique.

18. Procédé selon l'une des revendications 13 à 17, dans lequel les particules présentent une coloration naturelle, ou sont colorées.

19. Procédé selon l'une des revendications 13 à 18, dans lequel les particules sont marquées par un marqueur coloré, radioactif, fluorescent ou enzymatique.

20. Procédé selon l'une des revendications 13 à 19, dans lequel les particules comprennent des érythrocytes et/ou des thrombocytes et/ou des leucocytes ou des parties de ces derniers.

21. Procédé selon l'une des revendications 13 à 20, dans lequel les particules sont, pour renforcer la réaction, soumises à un traitement préalable avec des enzymes protéolytiques.

22. Procédé selon l'une des revendications 13 à 21, dans lequel des anticorps, en particulier contre des peptides, des protéines, des hydrates de carbone, des lipides, des acides nucléiques, des virus, des bactéries, des parasites, des cellules humaines, des cellules animales ou des cellules végétales ou des parties de ces derniers, sont liés aux particules.

23. Procédé selon l'une des revendications 13 à 22, dans lequel des antigènes ou d'autres ligands, tels par exemple que des peptides, des protéines, des hydrates de carbone, des lipides, des acides nucléiques, des virus, des bactéries, des parasites, des cellules humaines, des cellules animales, des cellules végétales ou des allergènes ou des parties de ceux-ci, sont liés aux particules.

24. Procédé selon l'une des revendications 13 à 23, dans lequel les particules comprennent en particulier du polystyrène, du polybromostyrène, de la gélatine, de la mélamine, de l'agarose polymérisée ou du poly(méthacrylate de méthyle).

25. Procédé selon l'une des revendications 13 à 24, dans lequel les particules sont magnétiques ou paramagnétiques.

26. Procédé selon l'une des revendications 13 à 25, dans lequel le mélange échantillon est exposé à la gravitation en étant soumis à une centrifugation.

27. Procédé selon l'une des revendications 13 à 26, dans lequel le mélange échantillon est exposé au magnétisme.

28. Procédé selon l'une des revendications 13 à 27, dans lequel le liquide échantillon comprend un matériau humain, animal ou végétal, en particulier du sang ou des constituants du sang.

29. Procédé selon l'une des revendications 13 à 28, dans lequel le réactif comprend en particulier des anticorps, des cellules d'essai, des particules synthétiques, des tampons ou des solutions de renforcement.

30. Procédé selon l'une des revendications 13 à 29, dans lequel on ajoute au réactif du glycérol ou d'autres molécules pour augmenter la densité de la solution.

31. Utilisation du dispositif selon l'une des revendications 1 à 12 en particulier en diagnostic destiné à la sérologie des groupes sanguins, de préférence pour déterminer des groupes sanguins, des anticorps contre les caractéristiques des groupes sanguins, des compatibilités entre le sang conservé et le receveur, pour déterminer des caractéristiques de thrombocytes et d'anticorps dirigés contre des thrombocytes, pour déterminer des caractéristiques de leucocytes et d'anticorps dirigés contre des leucocytes, pour détecter des virus hémagglutinants, pour détecter des anticorps contre des protéines, des virus, des bactéries, des parasites, pour détecter des antigènes bactériens ou parasitaires ou autres, et/ou pour détecter des auto-anticorps et des anticorps dirigés contre des allergènes.
